# EUROPÄISCHE PATENTANMELDUNG

(11) **EP 3 450 858 A1**
(43) Veröffentlichungstag der Anmeldung: **06.03.2019**
(21) Anmeldenummer: 18192450.7
(22) Anmeldetag: 04.09.2018
(51) Int. Cl.: F24D 13/02, H05B 3/20

(54) **PLATINE, INSBESONDERE FÜR FUSSBÖDEN, WÄNDE ODER DECKEN**

(30) Priorität: 04.09.2017 DE 102017215485
(71) Anmelder: Wagner, Franz, 81545 München (DE)
(72) Erfinder: Wagner, Franz, 81545 München (DE)
(74) Vertreter: Hoefer & Partner Patentanwälte mbB

(57) **Zusammenfassung**

Die Erfindung betrifft eine Platine (1), insbesondere zur Bildung eines Fußbodens, einer Wandverkleidung, einer Trennwandverkleidung oder einer Deckenverkleidung, umfassend einen Träger (2) mit einer Oberplatte (3), ausgebildet zur Aufnahme einer die sichtbare Oberfläche der Platine (1) darstellenden Nutzschicht (11), einer fest mit der Oberplatte (3) verbundenen Unterplatte (4), und einer elektrisch leitende Heizschicht (7), und zumindest einer seitlich offenen Nut (10) zwischen Oberplatte (3) und Unterplatte (4) zum Einführen einer elektrisch leitenden Leiste (20), wobei in zumindest einer Nut eine elektrisch leitende, durch die Leiste (20) kontaktierbare Leiterschicht (8) angeordnet ist, wobei die Leiterschicht (8) mit der Heizschicht (7) elektrisch kontaktiert ist.

## Beschreibung

Die Erfindung betrifft eine Platine, eine elektrisch leitende Leiste, einen Bausatz mit mehreren Platinen und Leisten und ein Verfahren zu wiederholenden Nutzung der Platinen.

Die hier betrachteten Platinen sind einzelne Elemente die z.B. zur Bildung eines Fußbodens, einer Wandverkleidung, einer Trennwandverkleidung oder einer Deckenverkleidung nebeneinandergesetzt werden.

Es ist eine Aufgabe der Erfindung, eine Platine anzugeben, die bei einfacher Herstellung und möglichst geringer Bauhöhe bzw. Dicke verschiedene Funktionen in sich vereint. Ferner soll die Platine einfach und schnell verlegt werden können und wiederverwendet werden können.

Die Lösung dieser Aufgabe erfolgt durch die Merkmale der unabhängigen Ansprüche. Die abhängigen Ansprüche haben vorteilhafte Ausgestaltungen der Erfindung zum Gegenstand.

Somit wird die Aufgabe gelöst durch eine Platine umfassend einen Träger, der zur Aufnahme einer Nutzschicht ausgebildet ist. Ferner kann die Platine auch den Träger mit bereits aufgebrachter Nutzschicht umfassen. Die Nutzschicht stellt die sichtbare und ggf. begehbare Oberfläche der Platine dar. Beispielsweise ist die Nutzschicht eine Laminatschicht, Kunststoffschicht, Filzschicht, Gewebeschicht, Glasschicht, Keramik, Steinschicht oder aus einem sonstigen Material, das ich für den Anwendungsfall eignet.

Zur Beschreibung vorliegender Erfindung werden räumliche Angaben wie "horizontal", "oben" oder "unten" verwendet. Der Einfachheit halber beziehen sich diese Angaben stets auf die Lage der Platine in ihrem montierten, einen Fußboden bildenden Zustand.

Der Träger der Platine umfasst zumindest eine Oberplatte, eine Unterplatte und eine bevorzugte Heizschicht zwischen Oberplatte und oder auf der Oberseite der Oberplatte, insbesondere zwischen Oberplatte und Nutzschicht. Die Oberplatte und die Unterplatte bestehen jeweils vorzugsweise aus nur einer einstückigen Platte, beispielsweise aus Carbon, Kunststoff, faserverstärkten Kunststoff, Holz-Derivate oder Metall. Allerdings ist es auch möglich, die "Oberplatte" und/oder "Unterplatte" jeweils durch mehrere übereinanderliegende Platten zu bilden.

Im montierten Zustand ist die Unterplatte einer Auflagefläche, beispielsweise dem Estrich, der Wand oder Decke, zugewandt. Zwischen der Auflagefläche und der Unterplatte kann sich eine Zusatzschicht befinden, die funktional als Anti-Rutsch-Schicht und/oder Dampfsperre und/oder thermische Isolierung und/oder Trittschalldämmung ausgebildet ist. Diese Zusatzschicht kann in die Unterplatte integriert oder mit der Unterplatte verbunden sein. Diese Ausgestaltungen werden noch im Detail erläutert.

Die Oberplatte und die Unterplatte sind vorzugsweise fest miteinander verbunden. Durch diese feste Verbindung der Oberplatte und der Unterplatte sind auch die zwischen Oberplatte und Unterplatte befindlichen Schichten/Platten fixiert. Die Verbindung von Oberplatte und Unterplatte erfolgt vorzugsweise durch Verbindungselemente, beispielsweise Bolzen, Nieten oder Schrauben, die sich beim Kürzen auch zerschneiden lassen, die sich senkrecht durch die Oberplatte, die Unterplatte und dazwischenliegende Schichten/Platten erstrecken. Diese Verbindungselemente ermöglichen ein zerstörungsfreies Lösen der Schichten/Platte. Zusätzlich oder alternativ ist es auch möglich, die einzelnen Schichten/Platten des Trägers miteinander stoffschlüssig zu verbinden, insbesondere zu verkleben.

Auf der Oberseite der Oberplatte wird die Nutzschicht aufgebracht. Die Nutzschicht ist insbesondere auf die Oberplatte aufgeklebt oder anderweitig lösbar befestigt. Die Nutzschicht kann auch auf die Oberplatte nur aufgelegt sein. Im Rahmen des erfindungsgemäßen Verfahrens wird noch im Detail die lösbare Verbindung zwischen Nutzschicht und Oberplatte beschrieben. Die horizontale Ausdehnung der Nutzschicht entspricht vorzugsweise der horizontalen Ausdehnung der Oberseite der Oberplatte, sodass die gesamte Oberplatte von der Nutzschicht bedeckt ist.

Die Heizschicht befindet sich zwischen Oberplatte und Unterplatte oder fest aufgebracht auf der Oberseite der Oberplatte und kann mehrere verschiedene Elemente umfassen die eingelegt sind oder zumindest teilweise in eine der beiden Platten integriert sind. Die Heizschicht erstreckt sich vorzugsweise über einen wesentlichen Teil der horizontalen Erstreckung der Platine und dient als elektrisch betriebene Heizung (Fußbodenheizung, Wandheizung oder Deckenheizung). Die Heizschicht kann insbesondere wie folgt positioniert werden: die Heizschicht kann unterhalb der Oberplatte eingelegt sein; die Heizschicht kann auf die Unterseite der Oberplatte aufgebracht sein; die Heizschicht kann sich an einer zwischen Oberplatte und Unterplatte eingelegten Zwischenplatte befinden. Ferner kann die Heizschicht auf die Oberseite der Oberplatte aufgebracht werden.

Es befindet sich zumindest eine seitlich offene Nut zwischen Oberplatte und Unterplatte. Die Nut ist insbesondere gebildeten durch: einen Abstand zwischen Oberplatte und Unterplatte; und/oder eine Aussparung in der Oberplatte und/oder der Unterplatte; und/oder eine mögliche Zwischenplatte. Die Zwischenplatte kann zwischen Oberplatte und Unterplatte angeordnet werden. Wenn die Zwischenplatte in ihrer horizontalen Ausdehnung kleiner ist als die Oberplatte und Unterplatte ergibt sich dadurch eine Nut zwischen Oberplatte und Unterplatte. Zusätzlich oder alternativ kann die Nut auch durch eine entsprechende Aussparung in der Zwischenplatte gebildet sein.

Vorzugsweise weist der Träger an zumindest zwei gegenüberliegenden Seiten, besonders vorzugsweise an allen vier Seiten, solch eine Nut auf.

Die Nuten in den Platinen sind zum Einstecken einer elektrisch leitenden Leiste ausgebildet. Wie noch im Detail beschrieben wird, sind die Leisten so breit, dass sie in den Nuten zweier benachbarter Platinen stecken und so lang, dass sie durch die Nuten mehrerer Platinen ragen. Besonders vorzugsweise sind die Nuten so ausgebildet, insbesondere ohne Hinterschneidungen oder Fortsätze, dass die Leisten lediglich durch eine horizontale Relativbewegung zwischen Platine und Leiste in die Nuten eingesetzt werden können. So ist vorzugsweise zwischen den Leisten und den Nuten keine Klick- oder Rastverbindung vorgesehen.

In der zumindest eine Nut befindet sich eine elektrisch leitende Leiterschicht. Die Nut ist durch eine horizontale Oberseite und eine horizontale Unterseite begrenzt. Die Leiterschicht befindet sich vorzugsweise an der Oberseite und/oder Unterseite der Nut und erstreckt sich somit horizontal. Vorzugsweise besteht die Leiterschicht aus einem aufgedampften Metall oder einem sonstigen, elektrisch leitenden Material, dass beispielsweise in flüssiger Form aufgebracht und ausgehärtet wurde. Dadurch kann eine sehr dünne Leiterschicht erzeugt werden.

Die Leiterschicht ist elektrisch leitend mit der Heizschicht kontaktiert. Insbesondere ist hierzu vorgesehen, dass die Leiterschicht mit der Heizschicht überlappt. Allerdings ist es auch möglich, die horizontale Ausdehnung der Heizschicht so zu gestalten, dass die ohnehin elektrisch leitende Heizschicht auch gleichzeitig die Leiterschicht in der Nut bildet.

Befindet sich die Heizschicht auf der Oberseite der Oberplatte, so ist die Heizschicht durch ein Leitelement, z.B. eine die Oberplatte durchbrechende Niet oder Draht, elektrisch leitend mit der Leiterschicht in der Nut verbunden. Vorzugsweise bildet der in der Nut endende Teil des Leitelements die Leiterschicht oder einen Teil der Leiterschicht, sodass die Leiste in der Nut direkt das Leitelement kontaktiert.

In der Nut ist die Leiterschicht so angeordnet, dass die in die Nut eingesteckte Leiste die Leiterschicht elektrisch leitend kontaktiert. Vorzugsweise umfasst die Platine zwei gegenüberliegende Nuten, in die jeweils eine elektrisch leitende Leiste eingesteckt werden kann. Dadurch ergibt sich ein geschlossener Stromkreis von der einen Leiste über die Leiterschicht in der zugehörigen Nut durch die Heizschicht hindurch zur gegenüberliegenden Leiterschicht und der zweiten Leiste.

Die Platine ist vorzugsweise rechteckig. Die Nuten erstrecken sich jeweils über die gesamte Kantenlänge. Die Kantenlänge der Platine beträgt vorzugsweise zwischen 10 cm und 2 m. Die hier beschriebenen "Dicken" beschreiben die vertikale Ausdehnung und können auch als Stärken oder Höhen bezeichnet werden. Die Trägerdicke des gesamten Trägers beträgt vorzugsweise zwischen 10 mm und 100 mm, besonders vorzugsweise zwischen 10 mm und 50 mm. Die Oberplattendicke und Unterplattendicke beträgt jeweils vorzugsweise zwischen 1 mm und 20 mm.

Vorzugsweise ist vorgesehen, dass die Leiterschicht maximal 2 mm, insbesondere maximal 1 mm, besonders vorzugsweise maximal 0,5 mm, dick ist.

Vorzugsweise ist vorgesehen, dass unter der Heizschicht eine Vielzahl an Lüftungskanälen ausgebildet ist. Die Lüftungskanäle erstrecken sich horizontal und sind an zumindest zwei gegenüberliegenden Seiten der Platine offen.

Die Lüftungskanäle sind so angeordnet, dass im montierten Zustand mehrerer Platinen der einzelne Lüftungskanal der einen Platine fluchtend übergeht in einen Lüftungskanal der nächsten Platine. Dadurch ergibt sich unterhalb der Heizung eine Vielzahl an Lüftungskanälen, die sich über den gesamten Raum erstrecken. Die nicht in Richtung des Raumes abstrahlende Wärme der Heizung erwärmt somit die Luft in den Lüftungskanälen. Diese erwärmte Luft strömt zu den Seiten des Raums und tritt beispielsweise im Bereich der Fußbodenleisten aus.

Gemäß einer Variante ist vorgesehen, dass die Lüftungskanäle in der Unterplatte ausgebildet sind. Insbesondere sind die Lüftungskanäle durch nach oben offene Nuten in der Unterplatte gebildet, wobei die nach oben offenen Nuten durch die angrenzende Schicht oder Platte, insbesondere die Heizschicht, verschlossen werden, wodurch sich die Kanäle bilden. Die Heizschicht ist dabei vorzugsweise auf der Unterseite der Oberplatte aufgebracht.

Gemäß einer weiteren Variante ist bevorzugt vorgesehen, dass sich zwischen Oberplatte und Unterplatte zumindest eine Zwischenplatte befindet. Die Lüftungskanäle befinden sich vorzugsweise in der Zwischenplatte. Vorzugsweise sind die Lüftungskanäle durch nach unten offene Nuten in der Zwischenplatte gebildet, wobei die nach unten offenen Nuten durch die angrenzende Schicht oder Platte, insbesondere die Unterplatte, verschlossen sind, wodurch sich die Kanäle bilden. Die Heizschicht ist vorzugsweise auf der Oberseite der Zwischenplatte oder auf der Unterseite der Oberplatte aufgebracht.

Gemäß einer weiteren Variante ist bevorzugt vorgesehen, dass die Lüftungskanäle durch nach oben offene Nuten in der Zwischenplatte gebildet sind, wobei die nach oben offenen Nuten durch die angrenzende Schicht oder Platte, insbesondere die Oberplatte, verschlossen sind, wodurch sich die Kanäle bilden. Die Heizschicht ist dabei vorzugsweise auf der Unterseite der Oberplatte aufgebracht.

Die horizontale Breite des Lüftungskanals beträgt vorzugsweise zwischen 1 mm und 30 mm, besonders vorzugsweise zwischen 1 mm und 10 mm. Die vertikale Höhe des Lüftungskanals beträgt vorzugsweise zwischen 1 mm und 10 mm.

Ferner ist es möglich, dass in zwei übereinanderliegenden Ebenen jeweils eine Vielzahl an Lüftungskanälen ausgebildet ist. Die ersten Lüftungskanäle erstrecken sich dabei senkrecht zu den zweiten Lüftungskanälen. Des Weiteren ist es auch möglich, dass in derselben Ebene eine Vielzahl an zueinander senkrecht stehenden Lüftungskanälen ausgebildet sind, die sich schneiden.

Vorzugsweise ist die Heizschicht durch elektrisch leitende Kohlenstoffnanopartikel gebildet. Vorzugsweise ist vorgesehen, dass die Heizschicht maximal 3 mm, insbesondere maximal 1 mm, besonders vorzugsweise maximal 0,5 mm, dick ist. Die Kohlenstoffnanopartikel können in einem Gewebe angeordnet sein, dass als Heizschicht in den Träger eingelegt wird oder auf eine der Platten aufgebracht wird. Des Weiteren ist es möglich, die Kohlenstoffnanopartikel in einer Dispersion in flüssiger Form auf die jeweilige Platte aufzubringen und aushärten zu lassen.

Wie bereits beschrieben, ist bevorzugt vorgesehen, dass an den vier Seiten der Platine jeweils eine seitlich offene Nut zwischen Oberplatte und Unterplatte ausgebildet ist. In jeder Nut befindet sich die Leiterschicht zur elektrischen Verbindung zwischen der Leiste und der Heizschicht. Im montierten Zustand mit mehreren Platinen werden der Leisten parallel angeordnet und erstrecken sich somit nur durch zwei gegenüberliegende Nuten der einzelnen Platine, jedoch nicht durch alle vier Nuten. Allerdings ist es durch die Ausbildung der vier Nuten an der Platine möglich, die Platinen sehr flexibel zu verlegen da beispielsweise die Leisten entweder an der Längsseite oder an der Breitseite der Platine eingesteckt werden können.

Um einen Kurzschluss zwischen den beiden Leisten zu vermeiden, ist vorzugsweise vorgesehen, dass die Leiterschicht in den Nuten eine elektrisch nicht-leitende Unterbrechung aufweist. Die Unterbrechung befindet sich in derselben Ebene wie die leitenden Abschnitte der Leiterschicht. Durch die Unterbrechung erfolgt die elektrische Kontaktierung zwischen Leiste und Leiterschicht nicht über die gesamtmögliche Fläche innerhalb der Nut.

An der Unterseite der Unterplatte befindet sich vorzugsweise eine Zusatzschicht, die funktional als Anti-Rutsch-Schicht und/oder Dampfsperre und/oder thermische Isolierung und/oder Trittschalldämmung ausgebildet. Diese Zusatzschicht kann auf die Unterplatte aufgebracht oder in die Unterplatte integriert sein. Beispielsweise ist die Zusatzschicht für eine Anti-Rutsch-Wirkung aus einem Elastomer und/oder durch Noppen gebildet. Dadurch muss die Platine nicht fest mit ihrer Auflagefläche verbunden werden, sondern kann einfach aufgelegt werden. Wenn eine Anti-Rutsch-Schicht verwendet wird, befindet sich die Dampfsperre vorzugsweise oberhalb der Anti-Rutsch-Schicht.

### Leiste und Bausatz

Die Erfindung umfasst ferner einen Bausatz. Der Bausatz umfasst mehrere der beschriebenen Platinen und zumindest eine elektrisch leitende Leiste. Die Leiste ist länger als mehrere Kantenlängen der Platinen. Die Leiste ist in etwa so breit wie zwei Tiefen (in horizontaler Richtung gemessen) der einzelnen Nut, sodass die Leiste in zwei benachbarte zueinander offene Nuten zweier Platinen ragt.

Die Platinen und die Leiste sind vorzugsweise so ausgebildet, dass im montierten Zustand (insbesondere des Fußbodens) unter der Leiste ein Freiraum bzw. Luftraum verbleibt.

Der Bausatz umfasst vorzugsweise elektrische Anschlüsse an den Enden der Leisten. Über diese elektrischen Anschlüsse können die Leisten, beispielsweise im Bereich der Fußbodenleisten, mit einem Stromkreis verbunden werden.

Die Erfindung umfasst ferner eine elektrisch leitende Leiste, ausgebildet für den beschriebenen Bausatz bzw. ausgebildet zur Verwendung mit den beschriebenen Platinen.

Die Leiste kann vollständig aus Metall bestehen. Ferner kann die Leiste teilweise aus Kunststoff und teilweise aus einem elektrisch leitenden Material bestehen. Das elektrisch leitende Material kann Metall oder ein Kunststoff mit elektrisch leitenden Additiven sein.

Vorzugsweise umfasst die Leiste einen elektrisch leitenden unteren Abschnitt, der zum Einstecken in die Nuten und zum Kontaktieren der Leiterschicht ausgebildet ist. Zusätzlich kann die Leiste zumindest einen elektrisch leitenden oberen Abschnitt umfassen, der dazu ausgebildet ist, in einen Spalt zwischen den benachbarten Platinen zu ragen. Vorzugsweise umfasst die Leiste in paralleler Anordnung zwei dieser oberen Anschnitte. Der untere Abschnitt und der zumindest eine obere Abschnitt der Leiste erstrecken sich jeweils über einen wesentlichen Teil der Länge, insbesondere über die gesamte Länge, der Leiste.

Der in den Spalt ragende obere Abschnitt der Leiste kann bei einer einfachen Ausgestaltung aus einem elektrisch isolierenden Material bestehen und lediglich dazu dienen, die beiden Platinen voneinander zu beabstandeten.

Vorzugsweise ist vorgesehen, dass der/die obere(n) Abschnitt(e) elektrisch leitend ist/sind und vom unteren Abschnitt elektrisch isoliert ist/sind. Dadurch können durch die Leisten zwei voneinander getrennte Stromkreise gebildet werden. Der untere Abschnitt der Leiste versorgt die Heizschicht mit Strom.

Der/die obere(n) Abschnitt(e) der Leiste kann/können für eine Stromversorgung anderer Elemente im Raum, beispielsweise für eine Beleuchtung, genutzt werden. Bei zwei oberen Abschnitten wird vorzugsweise ein oberer Abschnitt als Plus-Pol und der andere als MinusPol verwendet.

Vorzugsweise umfasst der beschriebene Bausatz einen Stromabnehmer der auf die Platinen bzw. auf den Spalt zwischen zwei Platinen aufgesetzt werden kann und elektrisch leitend den/die oberen Abschnitt(e) der Leiste kontaktiert. Besonders bevorzugt umfasst dieser Stromabnehmer einen Magneten, der auf dem oberen Abschnitt der Leiste haftet.

Vorzugsweise ist der zumindest eine obere Abschnitt der Leiste mit dem unteren Abschnitt der Leiste verklebt, wobei durch die Verklebung die elektrische Isolierung zwischen den beiden Abschnitten gebildet ist.

Besonders vorzugsweise ragt im montierten Zustand der zumindest eine obere Abschnitt der Leiste in seiner vertikalen Erstreckung niedriger als die Oberkante der Nutzschicht. Dadurch schließt der obere Abschnitt der Leiste nicht bündig mit der Nutzschicht ab, wodurch ein versehentliches Kontaktieren des oberen Abschnitts der Leiste weitestgehend vermieden wird.

Werden zwei obere Abschnitte verwendet, ragt vorzugsweise die Isolierung zwischen den beiden oberen Abschnitten in ihrer vertikalen Erstreckung höher als die oberen Abschnitte.

Vorzugsweise befindet sich seitlich des zumindest eines oberen Abschnittes (zwischen dem oberen Abschnitt und der angrenzenden Platine) eine dauerelastische Schicht, die fest mit der Leiste verbunden ist. Die dauerelastische Schicht dient z.B. als Dichtung.

### Verfahren

Die Erfindung umfasst ferner ein Verfahren zur wiederholenden Nutzung einer Platine die einen Fußboden, eine Wandverkleidung, eine Trennwandverkleidung oder eine Deckenverkleidung bildet. Die Platine umfasst dabei einen Träger mit einer aufgebrachten Nutzschicht. Besonders bevorzugt handelt es sich hierbei um die bereits beschriebene Platine mit Oberplatte und, Unterplatte, ggf. auch mit Heizschicht.

Das Verfahren sieht vor, dass die Nutzschicht vom Träger entfernt wird, nachdem die Platine zu einem Fußboden, einer Wandverkleidung, einer Trennwandverkleidung oder einer Deckenverkleidung montiert wurde und wieder demontiert wurde. So wird die Nutzschicht beispielsweise entfernt, nachdem die Platine eine längere Zeit, beispielsweise mehrere Jahre, genutzt wurde. Nach dem Entfernen der Nutzschicht wird eine neue Nutzschicht auf denselben Träger aufgebracht. Der Träger wird somit mehrfach verwendet.

Das Aufbringen der Nutzschicht auf den Träger erfolgt in einer Weise, die es erlaubt, die Nutzschicht zumindest ohne Zerstörung des Trägers zu entfernen. Besonders bevorzugt erfolgt das Entfernen auch ohne Zerstörung der Nutzschicht. Dadurch ist es möglich, auch die Nutzschicht erneut zu verwenden.

Die Verbindung zwischen Nutzschicht und Träger erfolgt vorzugsweise durch eine Klebeschicht. Dieser Kleber ist vorzugsweise durch Erhitzen und/oder durch Zugabe eines Lösungsmittels lösbar. Zusätzlich oder alternativ ist es möglich, die Verbindung zwischen Nutzschicht und Träger durch mechanisches Einwirken zu lösen.

Des Weiteren ist es möglich, die Nutzschicht über eine selbsthaftende, nicht aushärtende Schicht mit dem Träger zu verbinden, wobei diese Verbindung durch mechanische Krafteinwirkung lösbar ist. Beispielsweise kann dies durch eine Klett-Verbindung erreicht werden. Ferner kann die Nutzschicht lediglich auf den Träger aufgelegt sein; insbesondere für Fußböden.

Weitere Einzelheiten, Vorteile und Merkmale der vorliegenden Erfindung ergeben sich aus nachfolgender Beschreibung von Ausführungsbeispielen anhand der Zeichnung. Es zeigt:
- Fig. 1: einen Querschnitt einer Platine gemäß vorliegender Erfindung,
- Fig. 2: die Platine aus Figur 1 in Explosionsdarstellung,
- Fig. 3: einen Querschnitt einer weiteren Platine gemäß vorliegender Erfindung,
- Fig. 4: die Platine aus Figur 3 in Explosionsdarstellung,
- Fig. 5: eine Platine gemäß vorliegender Erfindung in Draufsicht,
- Fig. 6: die Unterseite einer Oberplatte einer Platine gemäß vorliegender Erfindung,
- Fig. 7: mehrere montierte erfindungsgemäße Platinen,
- Fig. 8: einen Querschnitt montierter erfindungsgemäßer Platinen mit einer ersten Leiste, und
- Fig. 9: einen Querschnitt montierter erfindungsgemäßer Platinen mit einer weiteren Leiste.

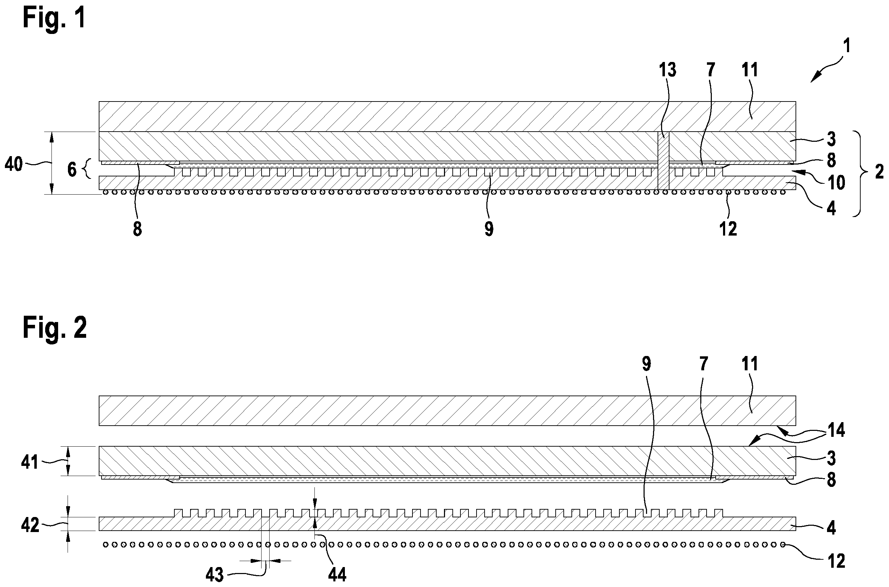

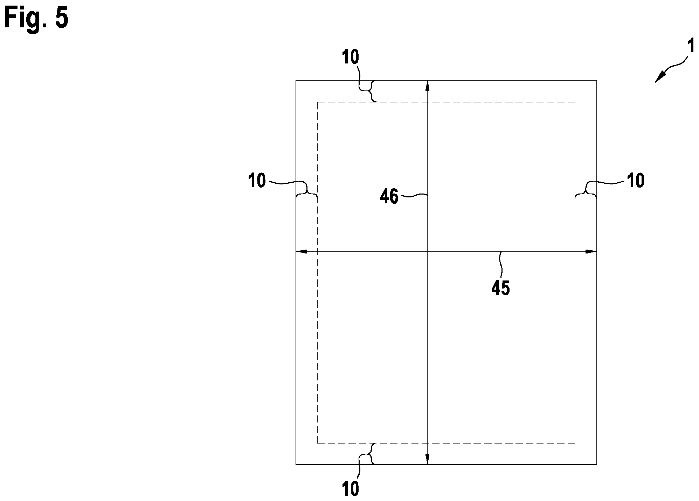

Die Figuren 1 bis 4 zeigen zwei unterschiedliche Ausführungen einer Platine 1. Anhand der Darstellungen in den Figuren 5 bis 9 werden Details aller Ausführungsbeispiele beschrieben.

Figur 1 zeigt einen Querschnitt der Platine 1. Figur 2 zeigt eine entsprechende Explosionsdarstellung. Die Platine 1 umfasst einen Träger 2 und eine auf dem Träger 2 befestigte Nutzschicht 11.

Der Träger 2 setzt sich zusammen aus einer Oberplatte 3, einer Unterplatte 4 und einer Heizebene 6. Die Heizebene 6 befindet sich zwischen Oberplatte 3 und Unterplatte 4 bzw. ist teilweise integriert in einer der beiden Platten 3, 4.

Die Heizebene 6 umfasst eine Heizschicht 7. Im gezeigten Beispiel ist die Heizschicht 7 auf die Unterseite der Oberplatte 3 aufgebracht.

Die Heizschicht 7 umfasst vorzugsweise Kohlenstoffnanopartikel, die als flüssige Dispersion und/oder Siebdruck aufgebracht wurden.

Des Weiteren umfasst die Heizebene 6 eine Vielzahl an Lüftungskanälen 9. Die Lüftungskanäle 19 sind durch eine Vielzahl an horizontal und /oder vertikal verlaufenden Nuten auf der Oberseite der Unterplatte 4 gebildet.

Durch entsprechende geometrische Gestaltung der Unterplatte 4 sind zwischen Unterplatte 4 und Oberplatte 3 an den Seiten der Platine 1 Nuten 10 gebildet.

Die einzelne Nut 10 ist seitlich offen. In der Nut 10 ist auf der Unterseite der Oberplatte 3 eine Leiterschicht 8 aufgebracht. Die Leiterschicht 8 überlappt elektrisch kontaktierend mit der Heizschicht 7.

Durch eine Verklebung 14, die auf die Unterseite der Nutzschicht 11 und/oder die Oberseite der Oberplatte 3 aufgebracht wird, erfolgt die lösbare Verbindung zwischen Nutzschicht 11 und Oberplatte 3.

An der Unterseite der Unterplatte 4 befindet sich eine Zusatzschicht 12, ausgebildet als Anti-Rutsch-Schicht.

Durch den Träger 2 erstrecken sich Verbindungselemente 13, beispielsweise Bolzen, Schrauben oder Nieten. Vorzugsweise sind die Schichten bzw. Platten des Trägers 2 durch Entfernen der Verbindungselemente 13 lösbar.

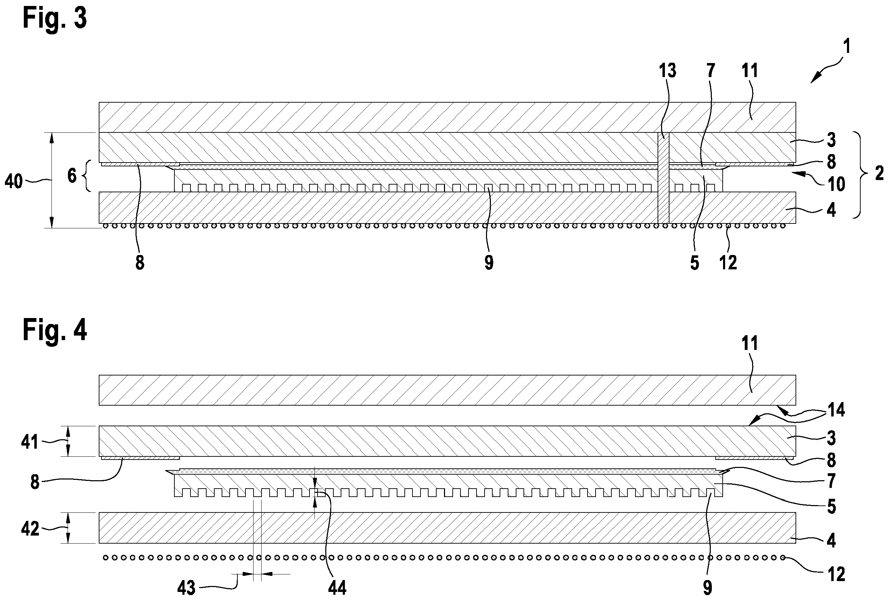

Der Aufbau der Platine 1 gemäß Figuren 3 und 4 entspricht der Platine 1 gemäß Figuren 1 und 2, mit den folgenden Unterschieden:
Gemäß den Figuren 3 und 4 umfasst die Platine 1 zwischen der Oberplatte 3 und der Unterplatte 4 eine Zwischenplatte 5. Die Vielzahl an Nuten zur Bildung der Lüftungskanäle 9 ist auf der Unterseite der Zwischenplatte 5 ausgebildet. Die seitlichen Nuten 10 sind durch eine entsprechend geometrische Gestaltung der Zwischenplatte 5 gebildet. Die Heizschicht 7 kann gemäß der Darstellung in Figur 4 auf die Oberseite der Zwischenplatte 5 oder auf die Unterseite der Oberplatte 3 aufgebracht werden.

Figur 5 zeigt eine Draufsicht auf die Platine 1. Dabei ist gut zu erkennen, dass an allen vier Seiten der Platine 1 jeweils eine Nut 10 ausgebildet ist.

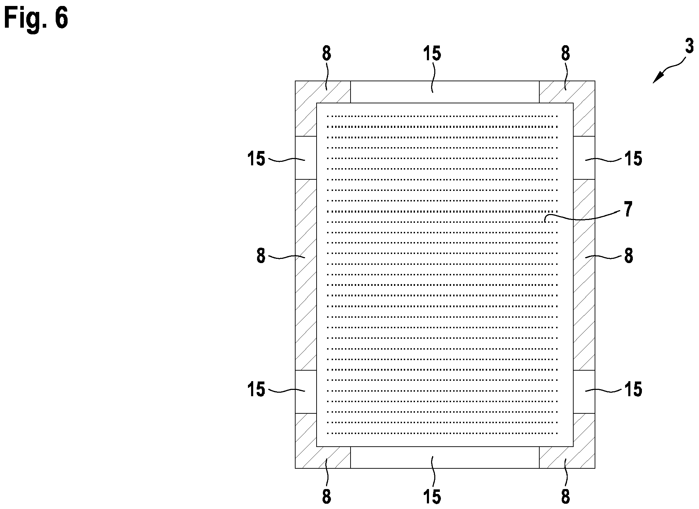

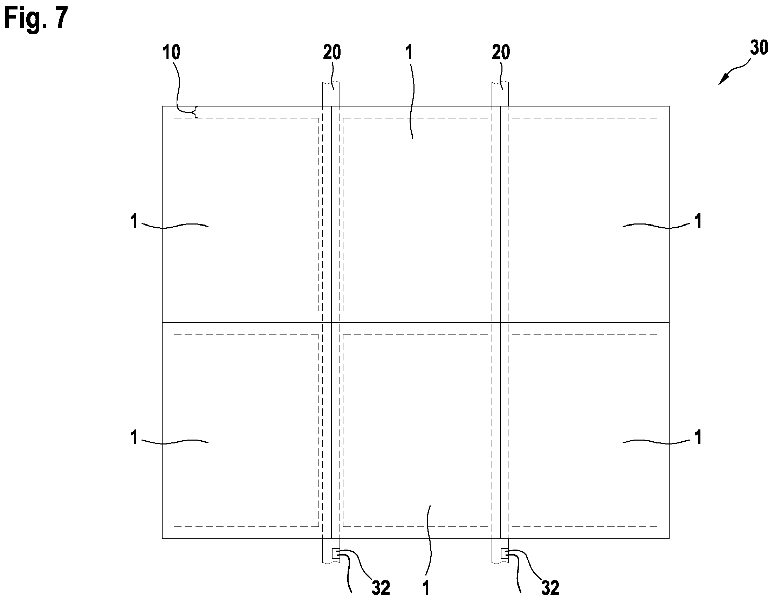

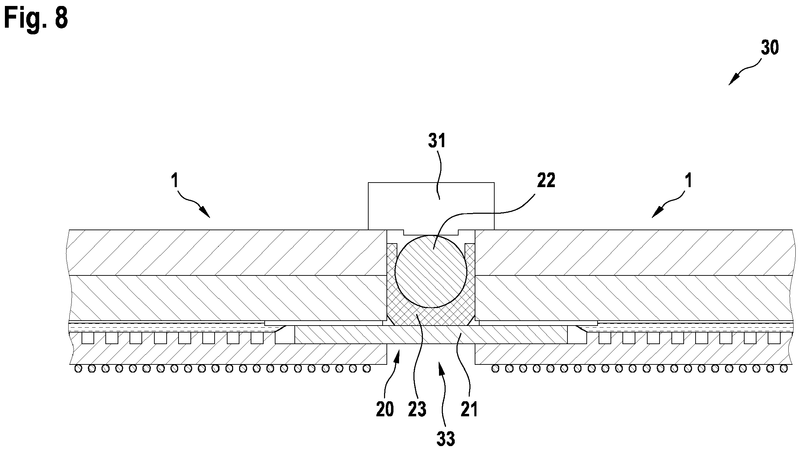

Figur 6 zeigt die Unterseite der Bodenplatte 3. In der Mitte befindet sich hier die Heizschicht 7. Wie bereits beschrieben kann die Heizschicht 7 auch alternativ auf die Oberseite der Zwischenplatte 5 aufgebracht werden. Rundum die Heizschicht 7 ist die Leiterschicht 8 in den Nuten 10 als eine dünne Schicht auf der Unterseite der Oberplatte 3 ausgebildet. Die Leisten 20 (siehe Figuren 7 und 8) können wahlweise in zwei gegenüberliegende Nuten 10 eingesetzt werden. Um einen Kurzschluss zu vermeiden, weist die Leiterschicht 8 an jeder der vier Seiten zumindest eine Unterbrechung 15 auf. Die leitenden Abschnitte der Leiterschicht 18 sind gestrichelt dargestellt.

Figur 7 zeigt eine Draufsicht eines montierten Bausatzes 30 aus mehreren Platinen 1 und mehreren Leisten 20. Die Platinen 1 sind dabei ohne Spalt aneinandergesetzt. Allerdings ist es auch möglich, gemäß der Schnittdarstellung in Figur 8, die Platinen 1 mit einem Spalt zueinander zu verlegen.

An den Enden der Leisten 20 befinden sich elektrische Anschlüsse 32 zum Anschluss von Kabeln.

Figur 8 zeigt eine Leiste 20 zwischen zwei Platinen 1. Die gezeigte Leiste 20 weist einen unteren Abschnitt 21 und einen oberen Abschnitt 22 auf. Die beiden Abschnitte 21, 22 sind durch eine elektrische Isolierung 23 voneinander getrennt. Für jeden der beiden Abschnitte 21, 22 ist an den Enden der Leisten 20 ein entsprechender elektrischer Anschluss vorgesehen, sodass zwei voneinander unabhängige elektrische Leiter durch die beiden Abschnitte 21, 22 entstehen.

Figur 8 zeigt einen Stromabnehmer 31, der auf den Spalt zwischen die beiden Platinen 1 aufgesetzt werden kann und den oberen Abschnitt 22 der Leiste 20 elektrisch leitend kontaktiert. Über den Stromabnehmer 31 kann beispielsweise eine Beleuchtung oder ein sonstiger elektrischer Verbraucher an den elektrischen Leiter (oberer Abschnitt 22) angeschlossen werden.

Figur 8 zeigt, dass der obere Abschnitt 22 nicht so weit nach oben ragt, wie die Oberkante der Nutzschicht 11. Der Stromabnehmer 31 ist entsprechend so ausgebildet, dass er in den Spalt bis zur Kontaktierung des oberen Abschnitts 22 ragt.

Ferner zeigt Figur 8 einen Freiraum 33 zwischen den beiden Platinen 1 und unter der Leiste 20.

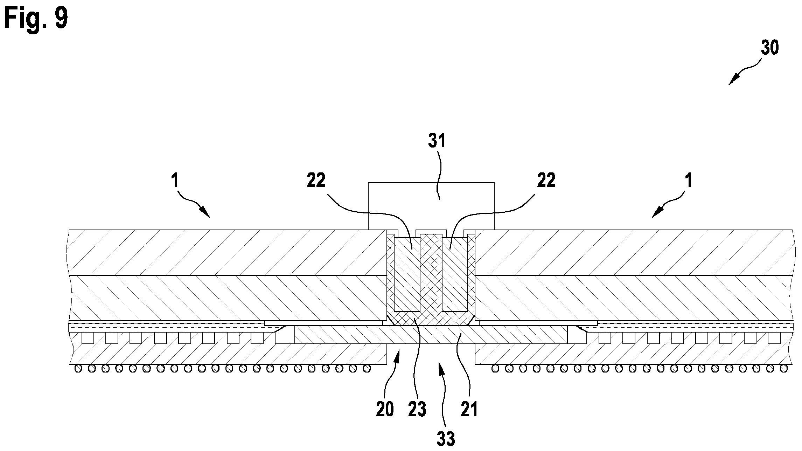

Figur 9 zeigt eine Leiste 20 zwischen zwei Platinen 1. Die gezeigte Leiste 20 weist einen unteren Abschnitt 21 und zwei parallele, nebeneinanderliegende obere Abschnitte 22 auf. Die drei Abschnitte 21, 22 sind durch eine elektrische Isolierung 23 voneinander getrennt. Für jeden der drei Abschnitte 21, 22 ist an den Enden der Leisten 20 ein entsprechender elektrischer Anschluss vorgesehen, sodass drei voneinander unabhängige elektrische Leiter durch die drei Abschnitte 21, 22 entstehen.

Figur 9 zeigt einen Stromabnehmer 31, der auf den Spalt zwischen die beiden Platinen 1 aufgesetzt werden kann und die beiden oberen Abschnitte 22 der Leiste 20 elektrisch leitend kontaktiert. Über den Stromabnehmer 31 kann beispielsweise eine Beleuchtung oder ein sonstiger elektrischer Verbraucher an den Stromkreis der oberen Abschnitte 22 angeschlossen werden.

Figur 9 zeigt, dass die oberen Abschnitte 22 nicht so weit nach oben ragen, wie die Oberkante der Nutzschicht 11. Der Stromabnehmer 31 ist entsprechend so ausgebildet, dass er in den Spalt bis zur Kontaktierung der oberen Abschnitte 22 ragt.

Alternativ zu Darstellung in Figuren 8 und 9 kann die Leiste 20 auch nur den unteren Abschnitt 21 umfassen. Die Breite der Leiste 20 bzw. die Tiefe der Nuten 10 ist dann vorzugsweise so gewählt, dass die Platinen 1 ohne Spalt montiert werden können. Die Leiste 20 verschwindet dabei nicht sichtbar in den beiden Nuten 10.

Alternativ zur Darstellung in Figuren 8 und 9 kann die Leiste auch einen nicht elektrisch leitenden oberen Abschnitt 22 aufweisen, der dazu dient, die Platinen 1 mit definiertem Spalt zu verlegen.

Die Figuren zeigen ferner eine Trägerdicke 40 des Trägers 2, eine Oberplattendicke 41 der Oberplatte 3 und eine Unterplattendicke 42 der Unterplatte 4. Ferner eingezeichnet sind eine Kanalbreite 43 und eine Kanalhöhe 44 der Lüftungskanäle 9. Die einzelnen Platinen 1 einzustecken sich über eine Platinen Breite 45 und eine Platinen Länge 46.

### Bezugszeichenliste

- 1: Platine
- 2: Träger
- 3: Oberplatte
- 4: Unterplatte
- 5: Zwischenplatte
- 6: Heizebene
- 7: Heizschicht
- 8: Leiterschicht
- 9: Lüftungskanäle
- 10: Nuten
- 11: Nutzschicht
- 12: Zusatzschicht
- 13: Verbindungselement
- 14: Verklebung
- 15: Unterbrechung
- 20: Leiste
- 21: unterer Abschnitt
- 22: oberer Abschnitt
- 23: elektrische Isolierung
- 30: Bausatz
- 31: Stromabnehmer
- 32: elektrischer Anschluss
- 33: Freiraum
- 40: Trägerdicke
- 41: Oberplattendicke
- 42: Unterplattendicke
- 43: Kanalbreite
- 44: Kanalhöhe
- 45: Platinen Breite
- 46: Platinen Länge

## Patentansprüche

1. Platine (1), insbesondere zur Bildung eines Fußbodens, einer Wandverkleidung, einer Trennwandverkleidung oder einer Deckenverkleidung, umfassend einen Träger (2) mit
• einer Oberplatte (3), ausgebildet zur Aufnahme einer die sichtbare Oberfläche der Platine (1) darstellenden Nutzschicht (11),
• einer fest mit der Oberplatte (3) verbundenen Unterplatte (4), und
• einer elektrisch leitende Heizschicht (7), und
• zumindest einer seitlich offenen Nut (10) zwischen Oberplatte (3) und Unterplatte (4) zum Einführen einer elektrisch leitenden Leiste (20),
• wobei in zumindest einer Nut eine elektrisch leitende, durch die Leiste (20) kontaktierbare Leiterschicht (8) angeordnet ist, wobei die Leiterschicht (8) mit der Heizschicht (7) elektrisch kontaktiert ist.

2. Platine nach Anspruch 1, wobei unter der Heizschicht (7) eine Vielzahl an Lüftungskanälen (9) ausgebildet sind, wobei sich die Lüftungskanäle (9) horizontal erstrecken und an zumindest zwei gegenüberliegenden Seiten der Platine (1) offen sind.

3. Platine nach einem der vorhergehenden Ansprüche, wobei die Heizschicht (7) durch elektrisch leitende Kohlenstoffnanopartikeln gebildet ist.

4. Platine nach einem der vorhergehenden Ansprüche, wobei an den vier Seiten der Platine (1) jeweils eine seitlich offene Nut (10) zwischen Oberplatte (3) und Unterplatte (4) zum Einführen einer elektrisch leitenden Leiste (20) aufweist, wobei in den vier Nuten (10) die Leiterschicht (8) ausgebildet ist und die Leiterschicht (8) in zumindest einer Nut (10) eine nicht-leitende Unterbrechung (15) aufweist.

5. Platine nach einem der vorhergehenden Ansprüche, wobei an der Unterseite der Unterplatte (4) eine Zusatzschicht (12) ausgebildet ist.

6. Bausatz (30) umfassend
• mehrere Platinen (1) nach einem der vorhergehenden Ansprüche und
• zumindest eine elektrisch leitende Leiste (20) mit einer Länge um durch die Nuten (10) mehrere Platinen (1) zu ragen und mit einer Breite um in die Nuten (10) zweiter benachbarter Platinen (1) zu ragen.

7. Elektrisch leitende Leiste (20) für einen Bausatz nach Anspruch 6, umfassend
• einen elektrisch leitenden unteren Abschnitt (21) zum Einstecken in die Nuten (10) und zum Kontaktieren der Leiterschicht (8) und
• einen elektrisch leitenden oberen Abschnitt (22), der dazu ausgebildet ist, in einen Spalt zwischen zwei Platinen (1) zu ragen.

8. Elektrisch leitende Leiste (20) nach Anspruch 7, wobei der untere Abschnitt (21) vom oberen Abschnitt (22) elektrisch isoliert ist.

9. Verfahren zu wiederholenden Nutzung einer Platine (1) umfassend die folgenden Schritte:
• Bereitstellen eines Trägers (2) der Platine (1) mit einer auf den Träger (2) aufgebrachten, vorzugsweise aufgeklebten, Nutzschicht (11),
• Entfernen der Nutzschicht (11) vom Träger (2) nachdem die Platine (1) zu einem Fußboden, einer Wandverkleidung, einer Trennwandverkleidung oder einer Deckenverkleidung montiert und wieder demontiert wurde, und
• Aufbringen, vorzugsweise Aufkleben, einer neuen Nutzschicht (11) auf denselben Träger (2).

10. Verfahren nach Anspruch 9, wobei eine Platine (1) nach einem der Anspruch 1 bis 5 verwendet wird.
